# EUROPEAN PATENT APPLICATION

(11) **EP 4 671 059 A1**
(43) Date of publication of application: **31.12.2025**
(21) Application number: 23923695.3
(22) Date of filing: 28.09.2023
(51) Int. Cl.: B60T 1/06, B60K 17/08, B60B 35/12, B60K 1/00

(54) **INTEGRATED DRIVE AXLE ASSEMBLY AND VEHICLE**

(30) Priority: 22.02.2023 CN 202320364010 U
(71) Applicant: BYD Company Limited, Shenzhen, Guangdong 518118 (CN)
(72) Inventor: LIU, Qiang, Shenzhen, Guangdong 518118 (CN); FU, Yongquan, Shenzhen, Guangdong 518118 (CN); QIN, Cheng, Shenzhen, Guangdong 518118 (CN)
(74) Representative: Mathys & Squire
(86) International application number: PCT/CN2023/122875
(87) International publication number: WO 2024/174530

(57) **Abstract**

An integrated drive axle assembly and a vehicle. The integrated drive axle assembly comprises a drive motor, a main reduction axle, a parking brake caliper and a parking brake disc, the drive motor and the wheels of a vehicle both being connected to the main reduction axle; the main reduction axle comprises an intermediate shaft and intermediate gears in fit connection with the intermediate shaft, an output shaft of the drive motor being in fit connection with an intermediate gear; the parking brake caliper is provided with an accommodating space; part of the structure of the parking brake disc is located in the accommodating space, and the parking brake disc is connected to the intermediate shaft.

## Description

### CROSS-REFERENCE TO RELATED DISCLOSURES

The present disclosure claims priority to Chinese Patent Disclosure No. 202320364010.8, filed by BYD COMPANY LIMITED, on February 22, 2023, titled "INTEGRATED DRIVE AXLE ASSEMBLY AND VEHICLE ".

### FIELD

The present disclosure relates to the field of vehicle technologies, and in particular, to an integrated drive axle assembly and a vehicle.

### BACKGROUND

Parking braking systems include a central parking braking system. In the prior art, the locking mechanism in the central parking braking system and the power assembly installation structure are relatively complex, and the dimensional chain is long. A fit clearance is likely to occur, which affects the power output. At the same time, maintenance and repair are inconvenient when a fault occurs.

### SUMMARY

The present disclosure is intended to solve at least one of the technical problems existing in the prior art.

To this end, the present disclosure provides an integrated drive axle assembly. The integrated drive axle assembly includes a drive motor, a main reduction axle, the drive motor and the wheels of a vehicle both being connected to the main reduction axle; the main reduction axle includes an intermediate shaft and intermediate gears in fit connection with the intermediate shaft, an output shaft of the drive motor being in fit connection with an intermediate gear; a parking brake caliper, the parking brake caliper being provided with an accommodating space; a parking brake disc, part of the structure of the parking brake disc being located in the accommodating space, and the parking brake disc being connected to the intermediate shaft.

The present disclosure also provides a vehicle, which includes the above-mentioned integrated drive axle assembly.

In the integrated drive axle assembly provided in the embodiments of this disclosure, the drive motor is connected to the intermediate shaft through the intermediate gear, and the parking brake disc is also connected to the intermediate shaft. Its structure is relatively simple, the dimensional chain is short, and the fitting accuracy is higher. The connection between the driving force of the drive motor and the braking force of the parking brake caliper is relatively smooth.

The additional aspects and advantages of the present disclosure will be partly described below, and will in part become evident from the following description, or may be understood through the practice of the present disclosure.

### BRIEF DESCRIPTION OF THE DRAWINGS

FIG. 1 is a first schematic diagram of the system principle of an integrated drive axle assembly according to an embodiment of the present disclosure.
FIG. 2 is a second schematic diagram of the system principle of an integrated drive axle assembly according to an embodiment of the present disclosure.
FIG.3 is a first schematic diagram of the overall structure of an integrated drive axle assembly according to an embodiment of the present disclosure.
FIG.4 is a schematic diagram of the exploded structure of an integrated drive axle assembly according to an embodiment of the present disclosure.
FIG.5 is a second schematic diagram of the overall structure of an integrated drive axle assembly according to an embodiment of the present disclosure.

### DETAILED DESCRIPTION

The following provides a detailed description of the embodiments of the present disclosure, along with examples of these embodiments shown in the accompanying drawings. In which the identical or similar reference numerals denote identical or similar components, or components having identical or similar functions. The embodiments described below with reference to the drawings are merely exemplary, are intended to explain the present disclosure and cannot be construed as a limitation on the present disclosure.

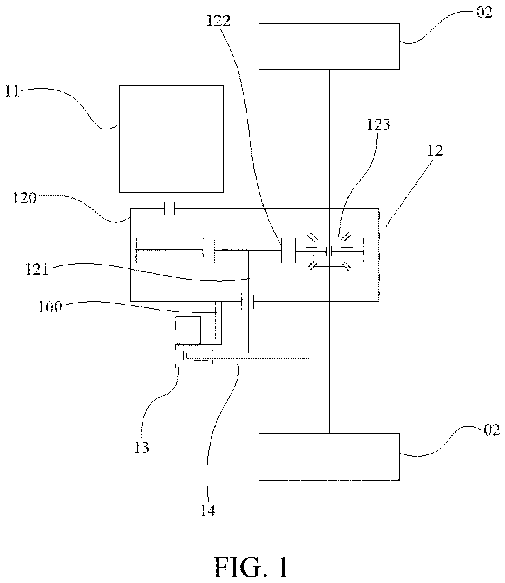

Referring to FIG.1 to FIG.5, according to an embodiment of the present disclosure, an integrated drive axle assembly 1 is provided. The integrated drive axle assembly 1 comprises a drive motor 11, a main reduction axle 12, a parking brake caliper 13, and a parking brake disc 14. The drive motor 11 and the wheels 02 of the vehicle are connected to the main reduction axle 12. The main reduction axle 12 comprises an intermediate shaft 121 and an intermediate gear 122 in fit connection with the intermediate shaft 121. The output shaft of the drive motor 11 is in fit connection with the intermediate gear 122. The parking brake caliper 13 is provided with an accommodating space. Part of the structure of the parking brake disc 14 is located in the accommodating space, and the parking brake disc 14 is connected to the intermediate shaft 121.

For the integrated drive axle assembly 1 provided in the embodiment of the present disclosure, two friction pads are provided on the parking brake caliper 13, and these two friction pads are arranged oppositely. The accommodating space of the parking brake caliper 13 is defined between the two friction pads, and part of the structure of the parking brake disc 14 is located in the accommodating space. When parking braking is required, the brake cylinder of the parking brake caliper 13 pushes the two friction pads, and the two friction pads clamp the parking brake disc 14. Thus, the intermediate gear 122 in the main reduction axle 12 is locked, and the intermediate gear 122 stops rotating, thereby achieving parking braking for the wheels 02.

In the integrated drive axle assembly 1 provided in the embodiment of the present disclosure, the drive motor 11 is connected to the intermediate shaft 121 through the intermediate gear 122, and the parking brake disc 14 is also connected to the intermediate shaft 121. Its structure is relatively simple, the dimensional chain is short, and the fitting accuracy is higher. The connection between the driving force of the drive motor 11 and the braking force of the parking brake caliper 13 is relatively smooth.

Referring to FIG.1, FIG.2, FIG.3, and FIG.4, in one embodiment, the main reduction axle 12 comprises an axle housing 120. The parking brake caliper 13 and the parking brake disc 14 are arranged outside the axle housing 120.

In this embodiment, both the parking brake caliper 13 and the parking brake disc 14 are both arranged outside the axle housing 120. In this way, when it is necessary to maintain and repair the parking brake caliper 13 and the parking brake disc 14, there is no need to disassemble the axle housing 120, and the operation of maintenance and repair is relatively convenient.

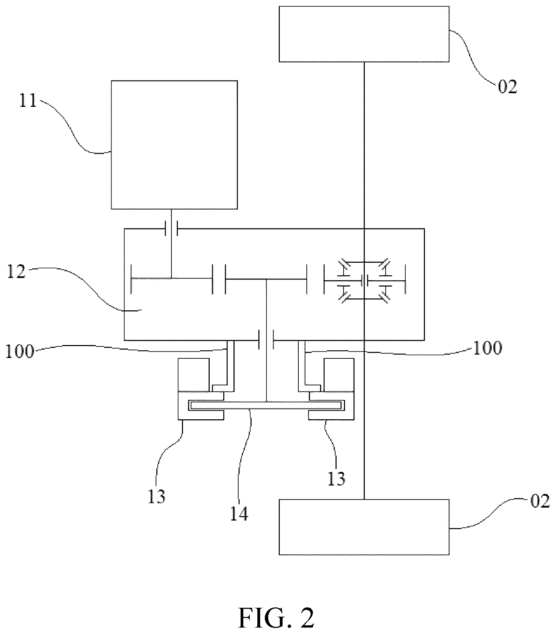

Referring to FIG.1, FIG.2, in one embodiment, a connecting bracket 100 is arranged on the axle housing 120, and the parking brake caliper 13 is mounted on the connecting bracket 100.

In this embodiment, the parking brake caliper 13 is mounted on the bolt-fixing points of the connecting bracket 100 which is attached to the axle housing 120 through bolts. The installation operation of the parking brake caliper 13 is convenient and the installation is relatively stable.

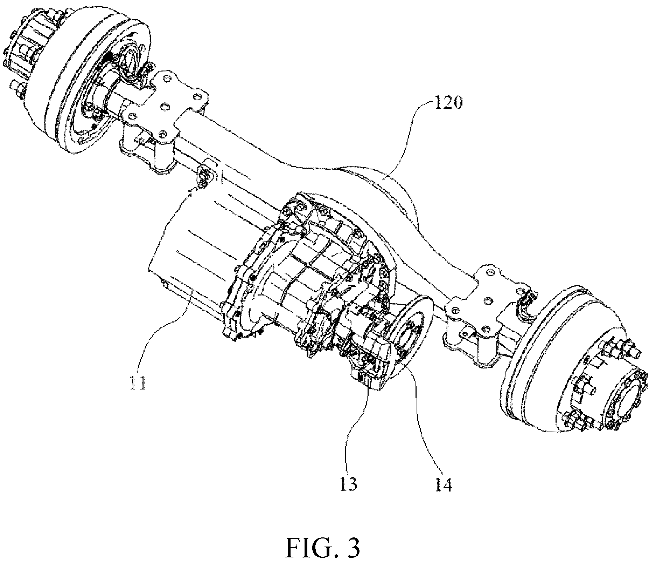

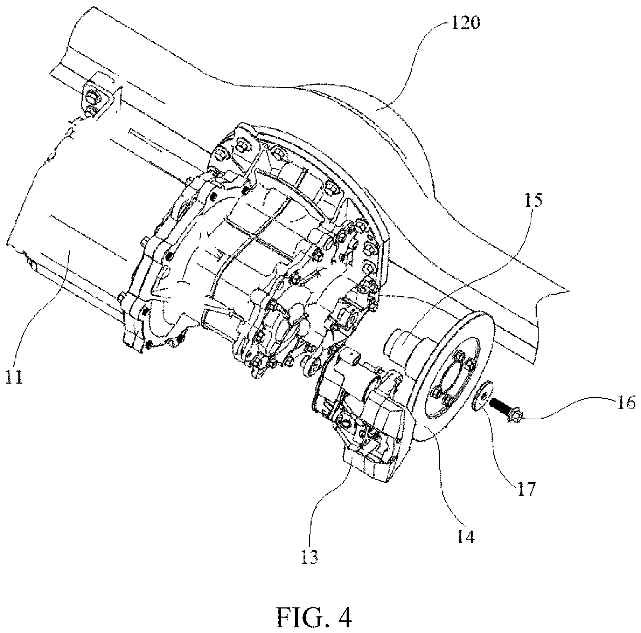

Referring to FIG.3 and FIG.4, in one embodiment, the housing of the drive motor 11 is mounted on the axle housing 120.

In this embodiment, the housing of the drive motor 11 is connected to the axle housing 120 through bolts. In this way, the connection between the drive motor 11 and the axle housing 120 is convenient and stable.

Referring to FIG.1 and FIG.2, in one embodiment, the main reduction axle 12 further comprises an input gear. The input gear is connected to the output shaft of the drive motor 11, and the intermediate gear 122 meshes with the input gear. The main reduction axle 12 further comprises a main reduction differential 123. The main reduction differential 123 comprises an output shaft and a main reduction differential gear mating with the output shaft. The intermediate gear 122 meshes with the main reduction differential gear. The output shaft is connected to the wheels 02 of the vehicle, and the wheels 02 are the rear wheels of the vehicle.

In this embodiment, the output shaft of the drive motor 11 is in fit connection with the intermediate gear 122 through the input gear and serves as a primary reduction mechanism. The intermediate gear 122 also meshes with the main reduction differential gear and serves as a secondary reduction mechanism. The parking brake disc 14 is arranged between the primary reduction mechanism and the secondary reduction mechanism. When the parking brake caliper 13 clamps the parking brake disc 14, the intermediate gear 122 of the primary reduction mechanism and the secondary reduction mechanism can be locked, thereby locking the wheels 02 for parking.

The axle housing 120 has a containment space. The intermediate shaft 121, the intermediate gear 122, the input gear, and the main reduction differential 123 are all arranged in the containment space of the axle housing 120. The main part of the drive motor 11 is arranged outside the containment space of the axle housing 120, and the housing of the drive motor 11 is connected to the axle housing 120 through bolts. The output shaft of the drive motor 11 extends into the containment space of the axle housing 120 to be connected to the input gear. The parking brake caliper 13 and the parking brake disc 14 are both arranged outside the containment space of the axle housing 120.

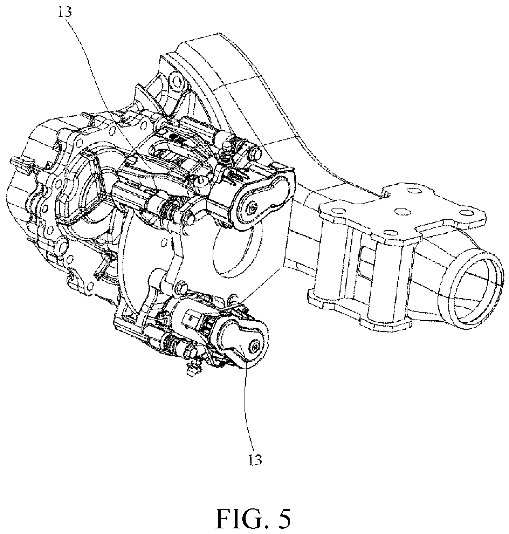

Referring to FIG.2 and FIG.5, in one embodiment, the number of the parking brake calipers 13 is two. The two parking brake calipers 13 are respectively located on both sides of the central axis of the parking brake disc 14. One of the two parking brake calipers 13 is configured as a P-gear locking mechanism.

It will be understood that when two parking brake calipers 13 are provided, two connecting brackets 100 are also correspondingly provided. That is, the parking brake calipers 13 and the connecting brackets 100 have one-to-one correspondence. One of the two parking brake calipers 13 is mounted on one of the connecting brackets 100, and the other of the two parking brake calipers 13 is mounted on the other connecting bracket 100.

In this embodiment, by adding one more parking brake caliper 13, a greater parking braking force can be achieved. In addition, one of the parking brake calipers 13 can be used as a P-gear locking mechanism to achieve multiple functions. That is, one of the parking brake calipers 13 can function as an equivalent P-gear locking mechanism, thereby realizing the dual functions of parking and P-gear locking.

That is, FIG.1, FIG. 3 and FIG.4 show an embodiment of a single electronic parking brake caliper, which can be applied to the parking braking system of conventional vehicles and vehicles without the need for P-gear locking. FIG. 2 and FIG. 5 show an embodiment of a dual electronic parking brake caliper, which can be applied to vehicles with a greater demand for parking braking force. At the same time, one of the electronic parking brake calipers can be used as a P-gear locking mechanism to meet the needs of vehicles with P-gear locking requirements.

Referring to FIG.4, in one embodiment, the integrated drive axle assembly further comprises a flange 15. The parking brake disc 14 is connected to the flange 15, and the flange 15 is connected to the intermediate shaft 121.

In this embodiment, the parking brake disc 14 is connected to the intermediate shaft 121 of the main reduction axle 12 through the flange 15. Moreover, the flange 15 is fixed with a washer 17 through a fastening bolt 16.

According to another embodiment of the present disclosure, a vehicle is provided. The vehicle comprises the above-mentioned integrated drive axle assembly.

In this disclosure, terms such as "first", "second", etc. are used to describe various pieces of information. However, such information should not be limited to these terms. These terms are merely used to distinguish information of the same type from one another. For example, without departing from the scope of this application, the first information may also be referred to as the second information, and similarly, the second information may also be referred to as the first information.

In the description of the present disclosure, it should be understood that the orientation or positional relationships indicated by terms such as "center", "longitudinal", "transverse", "length", "width", "upper", "lower", "front", "rear", "left", "right", "vertical", "horizontal", "top", "bottom", "inner", "outer", "clockwise", "anticlockwise", "axial"," radial", "circumferential", etc. are based on the orientation or positional relationships shown in the accompanying drawings, and are merely for the convenience of describing the present disclosure and simplifying the description. They do not indicate or imply that the referred device or element must have a specific orientation, be constructed and operated in a specific orientation, and thus should not be construed as a limitation on the present disclosure.

In addition, the terms "first" and "second" are used for descriptive purposes only and should not be understood as indicating or implying relative importance or implicitly indicating the number of the indicated technical features. Thus, a feature defined as "first" or "second" may explicitly or implicitly include one or more of the features. In the description of the present disclosure, the meaning of "plural" is more than two, unless otherwise clearly stipulated and defined.

In the description of the present disclosure, unless otherwise clearly stipulated and defined, the terms "install", "connect", "link", "fix" should be understood in a broad sense. For example, they can mean a fixed connection, a detachable connection, or an integral connection; they can be a mechanical connection or an electrical connection; they can be directly connected or indirectly connected through an intermediate medium, and can also mean the internal communication between two elements or the interaction relationship between them. For those of ordinary skill in the art, they can understand the specific meanings of the above terms in the present disclosure according to specific circumstances.

In the present disclosure, unless otherwise clearly stipulated and defined, the first feature being "on" or "under" the second feature may mean that the first and second features are in direct contact, or that the first and second features are in indirect contact through an intermediate medium. Moreover, the first feature being "above", "over", or "on top of" the second feature may mean that the first feature is directly above or obliquely above the second feature, or merely indicates that the horizontal height of the first feature is higher than that of the second feature. The first feature being "below", "under", or "beneath" the second feature may mean that the first feature is directly below or obliquely below the second feature, or merely indicates that the horizontal height of the first feature is lower than that of the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, those skilled in the art may combine the different embodiments or examples and the features of the different embodiments or examples described in this specification without contradiction.

Although the embodiments of the present disclosure have been shown and described above, it can be understood that the above embodiments are exemplary and cannot be understood as limitations on the present disclosure. Those skilled in the art can change, modify, or replace the above embodiments within the scope of the present disclosure.

## Claims

1. An integrated drive axle assembly, the integrated drive axle assembly comprising:
a drive motor (11);
a main reduction axle (12), the drive motor (11) and wheels of a vehicle both being connected to the main reduction axle (12);
the main reduction axle comprising an intermediate shaft (121) and intermediate gears (122) in fit connection with the intermediate shaft (121), an output shaft of the drive motor (11) being in fit connection with an intermediate gear (122);
a parking brake caliper (13), the parking brake caliper (13) being provided with an accommodating space;
a parking brake disc (14), part of the structure of the parking brake disc (14) being located in the accommodating space, and the parking brake disc (14) being connected to the intermediate shaft (121).

2. The integrated drive axle assembly according to claim 1, wherein the main reduction axle (12) comprises an axle housing (120), and the parking brake caliper (13) and the parking brake disc (14) are arranged outside the axle housing (120).

3. The integrated drive axle assembly according to claim 2, wherein a connecting bracket (100) is arranged on the axle housing (120), and the parking brake caliper (13) is mounted on the connecting bracket (100).

4. The integrated drive axle assembly according to claim 2 or 3, wherein the housing of the drive motor (11) is mounted on the axle housing (120).

5. The integrated drive axle assembly according to any one of claims 1 to 4, wherein the main reduction axle (12) further comprises an input gear, the input gear is connected to the output shaft of the drive motor (11), and the intermediate gear (122) meshes with the input gear.

6. The integrated drive axle assembly according to any one of claims 1 to 5, wherein the number of the parking brake calipers (13) is two, and the two parking brake calipers (13) are respectively located on both sides of the central axis of the parking brake disc (14).

7. The integrated drive axle assembly according to claim 6, wherein one of the two parking brake calipers (13) is configured as a P-gear locking mechanism.

8. The integrated drive axle assembly according to any one of claims 1 to 7, wherein the integrated drive axle assembly further comprises a flange (15), the parking brake disc (14) is connected to the flange (15), and the flange (15) is connected to the intermediate shaft (121).

9. The integrated drive axle assembly according to any one of claims 1 to 8, wherein the main reduction axle (12) further comprises a main reduction differential (123), the main reduction differential (123) comprises an output shaft and a main reduction differential gear mating with the output shaft, and the intermediate gear (122) meshes with the main reduction differential gear; the output shaft is connected to the wheels of the vehicle.

10. A vehicle, wherein the vehicle comprising the integrated drive axle assembly according to any one of claims 1 to 9.
